# EUROPÄISCHE PATENTANMELDUNG

(11) **EP 3 569 214 A1**
(43) Veröffentlichungstag der Anmeldung: **20.11.2019**
(21) Anmeldenummer: 19173288.2
(22) Anmeldetag: 08.05.2019
(51) Int. Cl.: A61H 3/04, B62K 3/00, B62K 5/025

(54) **FAHRZEUG**

(30) Priorität: 15.05.2018 DE 102018003870
(71) Anmelder: Klitsch, Edgar, 33615 Bielefeld (DE)
(72) Erfinder: Klitsch, Edgar, 33615 Bielefeld (DE)
(74) Vertreter: Patentanwälte Dörner & Kötter PartG mbB

(57) **Zusammenfassung**

Die Erfindung betrifft ein Fahrzeug mit elektrischem Antrieb (1, 25) für eine Person, umfassend einen Sitz (2), eine Lenkvorrichtung (4) und mindestens drei Räder. Es ist eine Standplatte (3) vorgesehen. Sitz (2) und Standplatte (3) sind klappbar.

## Beschreibung

Die Erfindung betrifft ein Fahrzeug mit elektrischem Antrieb.

Im allgemeinen Sprachgebrauch werden solche Fahrzeuge, auf denen eine Person sitzend elektrisch angetrieben fahren kann, als Scooter - im fachlichen Sprachgebrauch - als Krankenfahrstuhl bezeichnet. Auch Bezeichnungen wie Elektromobil, Seniorenmobil o. dgl. finden Verwendung. Zudem sind elektrisch angetriebene Rollstühle bekannt. Eine Fahrt im Stehen ist bei diesen Fahrzeugen nicht vorgesehen. Für eine solche, elektrisch angetriebene Fortbewegung im Stehen sind Elektroroller bekannt.

Nicht motorisch betriebene Gehilfen sind ebenfalls bekannt, nämlich in Form von Rollatoren oder Gehwagen. Unter einem Rollator oder Gehwagen wird eine fahrbare Gehhilfe verstanden, die üblicherweise nur zur Abstützung beim Gehen dient und die in der Regel aus einem mit Rädern versehenen Stützgestänge besteht.

Die bisher bekannten Krankenfahrstühle oder Scooter sind aufgrund ihrer Auslegung, nur mit Motor zu bewegen. Der Personenkreis, der diese Krankenfahrstühle oder Scooter benutzt, ist überwiegend nicht mehr zu einer länger andauernden Fortbewegung im Gehen, also mit Muskelkraft, fähig. Das Fahren ist nur im Sitzen möglich. Typische Merkmale für Krankenfahrstühle oder Scooter sind ein großer bequemer Sitz, eine Lenkvorrichtung und 3 oder 4 Räder.

Bei den bekannten Rollatoren oder Gehwagen ist nur die Funktion einer fahrbaren Gehstütze möglich. Die benutzende Person muss den Rollator oder Gehwagen während des Gehens ständig in Laufrichtung halten. Jede Bodenunebenheit verändert die Laufrichtung des Rollators und muss sofort gegengesteuert werden. Diese Instabilität wird durch die vorderen drehbaren Bockrollen verursacht, die aber aufgrund der fehlenden Lenkvorrichtung für eine Richtungsänderung notwendig sind.

In der DE 20 2011 051 354 U1 ist zwar ein lenkbarer Rollator gezeigt; die Lenkung ist jedoch bei diesem Konzept nur über die Hinterräder und über Drahtseile möglich, was eine Instabilität zur Folge hat.

In der WO 2011/003392 A1 ist darüber hinaus ein Elektroantrieb für einen Rollator mit einer Standfläche gezeigt, welcher fest oder lösbar an dem Rollator angebracht ist. Aufgrund seiner Beschaffenheit kann der Antrieb nur auf ebenen festen Straßenbelägen verwandt werden.

Die bekannten Fahrzeuge und Einrichtungen ermöglichen jeweils entweder eine Benutzung mit Muskelkraft als Rollator bzw. Gehwagen oder eine Benutzung mit elektrischem Antrieb als Krankenfahrstuhl bzw. Scooter. Der Benutzer muss sich also vor Antritt des Weges entscheiden, ob er sich in der körperlichen Verfassung fühlt, die zurück zu legende Strecke mit Muskelkraft zu bewältigen. Dies ist ungünstig, da sich eine Vielzahl der Personen aus Sicherheitsgründen für den motorisch angetriebenen Krankenfahrstuhl bzw. Scooter entscheiden wird. In Folge dessen findet kein Muskeltraining statt, obwohl zumindest eine teilweise Bewältigung der Strecke mit Muskelkraft möglich wäre. Dadurch wird die körperliche Mobilität der Person langfristig weiter einschränkt.

Vor diesem Hintergrund liegt der Erfindung die Aufgabe zugrunde, ein Fahrzeug mit elektrischem Antrieb so zu gestalten, dass eine Benutzung als muskelbetriebener Rollator bzw. Gehwagen ebenso möglich ist, wie ein elektrischer Betrieb als Krankenfahrstuhl bzw. Scooter. Gemäß der Erfindung wird diese Aufgabe mit den Merkmalen des Patentanspruchs 1 gelöst.

Mit der Erfindung ist ein Fahrzeug mit elektrischem Antrieb geschaffen, bei dem eine Benutzung als muskelbetriebener Rollator bzw. Gehwagen ebenso möglich ist, wie ein elektrischer Betrieb als Krankenfahrstuhl bzw. Scooter. Insbesondere ist ein Krankenfahrstuhl mit Elektroantrieb und gleichzeitig eine Gehhilfe mit Rollator-Funktion vereint in einem Fahrzeug. Die Funktion als Krankenfahrstuhl steht im Vordergrund, was Kurvengeschwindigkeit und unwegsames Gelände wie z.B. Waldwege betrifft. Aber auch eine vollwertige Rollator-Funktion ist gewährleistet.

In Weiterbildung der Erfindung ist die Lenkvorrichtung ausziehbar. Diese Ausbildung gewährleistet, dass sich die Lenkvorrichtung unabhängig von der jeweiligen Betriebsart als Gehwagen oder als Krankenfahrstuhl immer in der für den Benutzer geeigneten Höhe befindet.

Vorteilhaft sind ein Antriebsteil und ein Grundgestell ausgebildet, die lösbar miteinander verbunden sind. Diese zweiteilige Ausbildung ermöglicht ein Zerlegen des Fahrzeugs in zwei Teile, was den Transport des Fahrzeugs auch in üblichen Personenkraftwagen ermöglicht, was bei bekannten Krankenfahrstühlen ausgeschlossen ist. Außerdem lassen sich die beiden einzelnen Teile aufgrund ihres geringeren Einzelgewichts leichter heben.

In Ausgestaltung der Erfindung sind das Antriebsteil und das Grundgestell formschlüssig miteinander verbunden. Diese Art der Verbindung ist sehr zuverlässig und zugleich leicht zu bedienen, was insbesondere für ältere Menschen die Handhabung erleichtert.

Bevorzugt ist eine Gepäckablage vorgesehen. Die Gepäckablage erhöht die Funktionalität des Fahrzeugs, so dass mit diesem auch Einkäufe problemlos transportiert werden können. Aber auch größere Gegenstände, bspw. Golftaschen können transportiert werden.

In anderer Weiterbildung der Erfindung sind die Räder mit einer Federung versehen. Die Federung erhöht den Komfort beim Fahren mit dem Fahrzeug. Zudem lässt sich bei einer dreiräderigen Ausführung des Fahrzeugs mit Hilfe der Federung eine Kurvensteuerung durch Gewichtsverlagerung erzielen.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1a: die Darstellung eines erfindungsgemäßen Fahrzeugs im Betriebszustand als Krankenfahrstuhl ;
- Figur 1b: die Darstellung des erfindungsgemäßen Fahrzeugs im Betriebszustand für Fahren im Stand;
- Figur 1c: die Darstellung des erfindungsgemäßen Fahrzeugs im Betriebszustand als Laufrad;
- Figur 1d: die Darstellung des erfindungsgemäßen Fahrzeugs im Betriebszustand als Gehwagen;
- Figur 2a: die Darstellung des erfindungsgemäßen Fahrzeugs in anderer Ausbildung im Betriebszustand als Krankenfahrstuhl;
- Figur 2b: die Darstellung des erfindungsgemäßen Fahrzeugs in anderer Ausbildung im Betriebszustand als Gehwagen;
- Figur 3a: die Darstellung des erfindungsgemäßen Fahrzeugs in einer weiteren Ausbildung im Betriebszustand als Gehwagen;
- Figur 3b: die Darstellung des erfindungsgemäßen Fahrzeugs in einer weiteren Ausbildung im Betriebszustand für Fahren im Stand;
- Figur 3c: die Darstellung des erfindungsgemäßen Fahrzeugs in anderer Ausbildung im Betriebszustand als Krankenfahrstuhl;
- Figur 4a: die Darstellung des Antriebsteils;
- Figur 4b: die Darstellung des Grundgestells;
- Figur 4c: die ausschnittsweise vergrößerte Darstellung des Grundgestells mit hinterem Rad und Standplatte.

Das erfindungsgemäße Fahrzeug ist zur Benutzung für eine Person vorgesehen, insbesondere eine Person mit Gehbehinderung. Es weist einen elektrischen Antrieb 1 bzw. Motor auf und umfasst einen Sitz 2, eine Lenkvorrichtung 4 und mindestens drei Räder 24, 32, 35. An dem Fahrzeug ist eine Standplatte 3 vorgesehen.

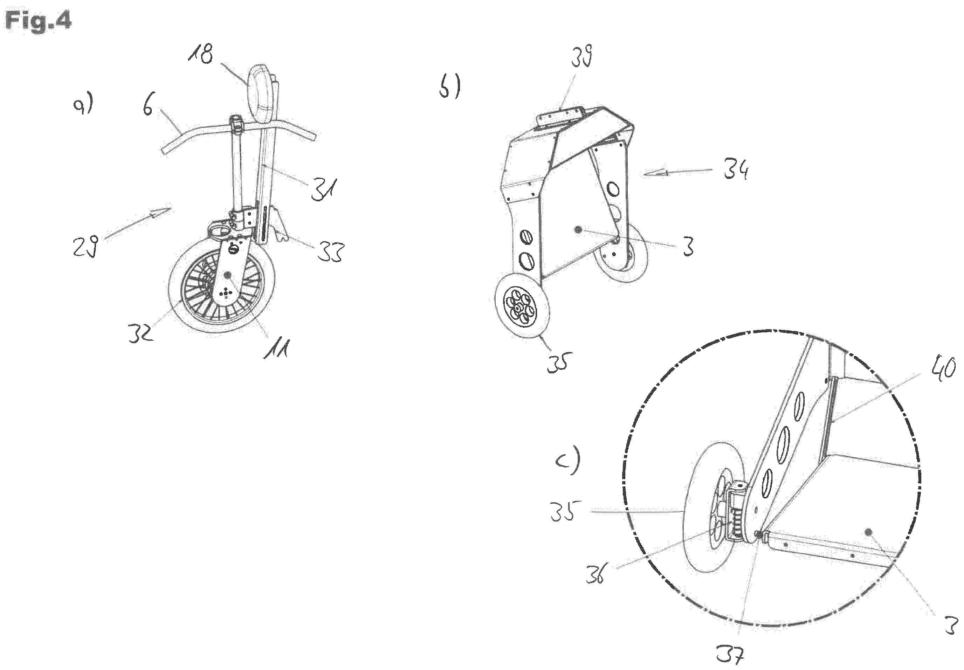

Das Fahrzeug ist von einem Antriebsteil 29 und einem Grundgestell 34 gebildet, die lösbar miteinander verbunden sind (vgl. Figuren 4a, 4b). In dem Antriebsteil 29 ist der elektrische Antrieb 1 angeordnet. Antriebsteil 29 und Grundgestell 34 sind im Ausführungsbeispiel formschlüssig miteinander verbunden. Hierzu weist das Antriebsteil 29 eine Adapterplatte 33 auf, die mit einem Gegenstück 39 am Grundgestell 34 korrespondiert. Die Verbindung der Adapterplatte 33 mit dem Gegenstück 39 bildet eine Schnellkupplung. Andere Verbindungen als die beschriebene sind selbstverständlich ebenfalls möglich. Das Grundgestell 34 hat eine im Wesentlichen U-förmig Gestalt, wodurch zwei Schenkel ausgebildet sind. An den dem Antriebsteil 29 abgewandten Enden der Schenkel sind Räder 35 angeordnet. An den Schenkeln des Grundgestells 34 sind Auflagebolzen 37 für die Standplatte 3 vorgesehen. Die Standplatte 3 weist Aussparungen 38 zur Aufnahme der Auflagebolzen 37 auf.

Der Sitz 2 und die Standplatte 3 sind klappbar an dem Fahrzeug befestigt. Der Sitz 2 weist einen Sitzausleger 31 auf, an dessen einen Ende eine Sitzfläche 18 angeordnet ist. An dem der Sitzfläche 18 abgewandten Ende weist der Sitzausleger 31 eine Befestigungseinrichtung auf. In Abwandlung des Ausführungsbeispiels kann der Sitz auch nach Art eines Fahrradsattels ausgebildet sein. Auch kann der Sitz auf einem Sitzausleger angebracht sein, der in einem bodennahen Bereich des Grundgestells 34 befestigt ist.

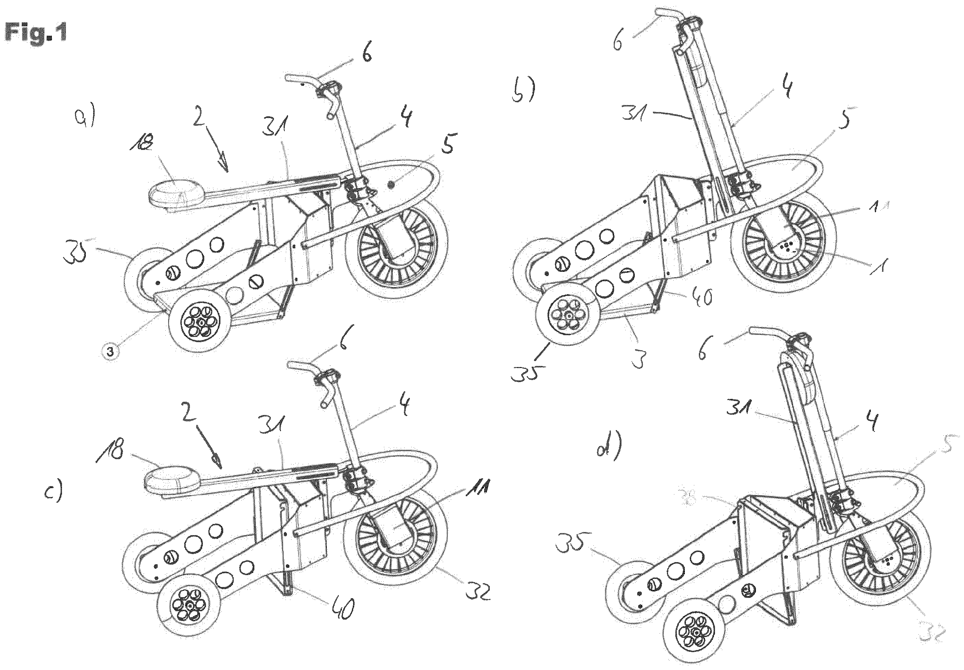

Die Standplatte 3 ist auf ihrer dem Antriebsteil 29 zugewandten Seite in einem mit Langlöchern versehenen Halter 40 geführt. Die Standplatte 3 ist auf diese Weise von einer horizontalen Position, wie sie in den Figuren 1a und 1b dargestellt ist, in eine senkrechte Position, wie sie in den Figuren 1c und 1d dargestellt ist, bauraumoptimiert einschwenkbar.

Die Lenkvorrichtung 4 ist ausziehbar. Hierzu weist die Lenkvorrichtung eine teleskopierbare, vertikale Lenkstange auf, die an ihrem dem Boden zugewandten Ende an einer Vorderradgabel 11 befestigt ist. An dem dem Boden abgewandten Ende der Lenkstange ist ein Lenker 6 angeordnet, der mit einem - nicht dargestellten - Bremshebel versehen sein kann. Ebenso können Steuereinrichtungen für den Antrieb 1 an dem Lenker 6 angeordnet sein.

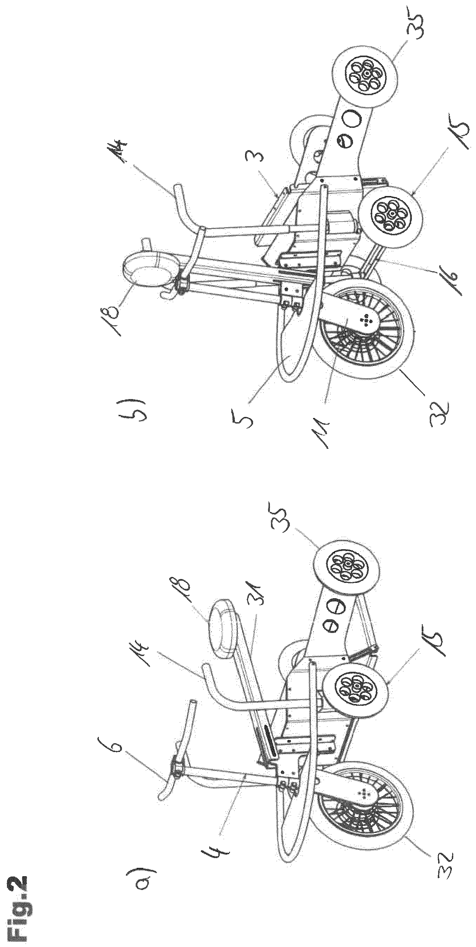

In den Ausführungsbeispielen nach den Figuren 1 und 2 ist an dem Fahrzeug eine Gepäckablage 5 vorgesehen. Die Gepäckablage 5 ist an das Fahrzeug steckbar und oberhalb des (Vorder-)Rades 32, welches gleichzeitig in diesen Ausführungen das Antriebsrad bildet, positioniert. Die Gepäckablage 5 liegt auf der Vorderradgabel 11 auf.

Im Ausführungsbeispiel nach Figur 1 ist das Fahrzeug in Form eines Dreirades ausgebildet. Das vordere Rad 32 bildet das Antriebsrad. Es hat einen im Verhältnis zu den hinteren zwei Rädern 35 größeren Durchmesser. Der Durchmesser des Antriebsrades 32 ist so bemessen, dass der Radmittelpunkt höher als übliche Bordsteine ist, so dass das Rad 32 problemlos über eine Bordsteinkante laufen kann, um somit von der Straße auf den Gehweg zu gelangen. Die dreiräderige Ausführung bietet zudem den Vorteil, das Fahrzeug mit dem Körpergewicht zu steuern. Hierzu ist an den Rädern 35 eine Federung 36 vorgesehen (vgl. Figur 4c). Diese dient einerseits als Stoßabfederung für Wegstrecken mit schlechtem Fahrbahnbelag oder unwegsames Gelände, andererseits als Neigetechnik. Durch die Verlagerung des Körpergewichtes wird die Druckfederung zusammen gedrückt und somit eine Schräglage des Fahrzeuges erreicht, was durch die dreiräderige Ausführung, also eine Dreipunkt-Auflage begünstigt wird.

Im Ausführungsbeispiel nach Figur 2 ist das Fahrzeug mit zwei zusätzlichen Lenkrädern 15 versehen, die bei Bedarf zugeschaltet werden können. Die Lenkräder 15 sind im Ausführungsbeispiel über Zahnriemen 16 synchronisiert und können soweit abgelassen werden, bis das vordere Antriebsrad 32 keinen Bodenkontakt mehr hat. Zudem sind in dieser Variante zwei Stützgriffe 14 an dem Fahrzeug angebracht, die nicht telekopierbar sind, aber höhenverstellbar sind.

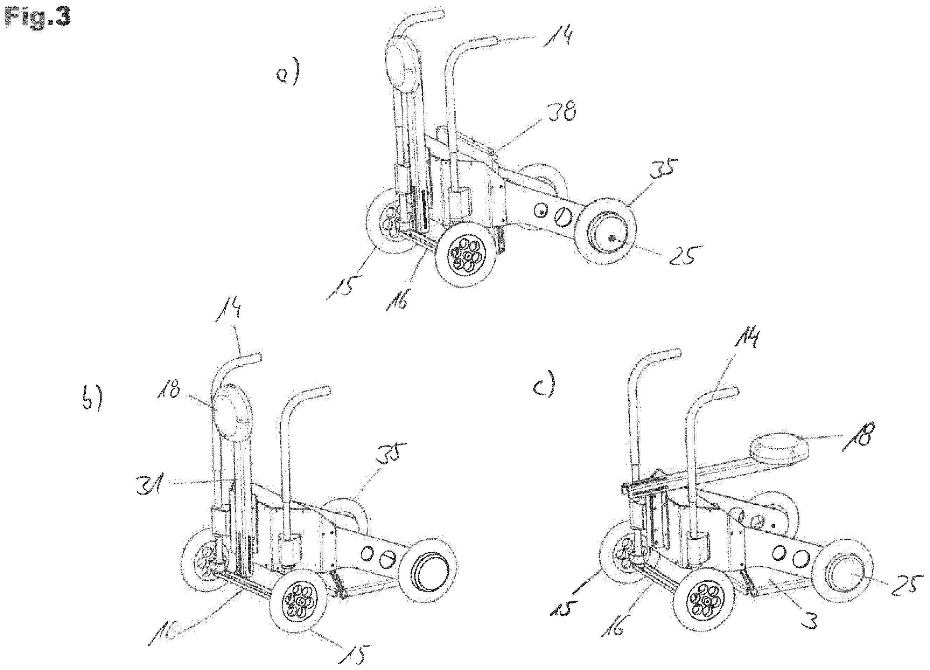

Die in Figur 3 gezeigte Form der Nutzung des Fahrzeugs bedient sich allein des Grundgestells 34; das Antriebsteil 29 ist abgekoppelt. Auch hier finden die zwei zusätzlichen Lenkräder 15 Verwendung, die - wie vorstehend beschrieben - über Zahnriemen 16 synchronisiert sind. Bei dieser Variante können die Räder 35 angetrieben sein. Hierzu ist dann an beiden Rädern 35 ein Antrieb 25 angeordnet.

In allen Ausführungsbeispielen ist es möglich, das Fahrzeug als Krankenfahrstuhl bzw. Scooter (vgl. Figuren 1a, 2a, 3c) oder als Gehwagen bzw. Rollator zu benutzen (vgl. Figuren 1d, 2b, 3a). Ersichtlich ist bei der Benutzung als Krankenfahrstuhl der Sitz 2 mit dem Sitzausleger 31 waagerecht angeordnet. Gleichzeitig ist auch die Standplatte 3 waagerecht ausgerichtet. Bei einer bodennahen Befestigung am Grundgestell 34 ist der Sitzausleger in dieser Funktionsstellung unter einem Winkel ausgerichtet. Der Benutzer kann folglich auf der Sitzfläche 18 des Sitzes 2 Platz nehmen und seine Füße auf der Standplatte 3 platzieren. Mit den Händen ergreift der Benutzer die Lenkstange 6, so dass das Fahrzeug in Bewegung gesetzt werden kann. Der Antrieb kann dabei verschiedene Fahrgeschwindigkeiten ermöglichen. Die Wahl der Geschwindigkeit kann durch geeignete Vorrichtungen am Lenker erfolgen.

In der Funktion als Gehwagen sind dagegen sowohl der Sitz 2 mit dem Sitzausleger 31 als auch die Standplatte 3 senkrecht ausgerichtet. Dadurch ist der zwischen den Schenkeln des Grundgestells 34 gebildete Raum freigegeben. Zudem ist die Lenkstange der Lenkvorrichtung 4 ausgezogen bzw. die Griffe 14 befinden sich in ihrer oberen Position. Folglich kann der Benutzer zwischen die Schenkel treten und die Lenkstange 6 ergreifen und sich mit Muskelkraft fortbewegen, wobei sich der Benutzer in bekannter Weise abstützen kann. In den Ausführungen gemäß den Figuren 2b und 3a stützt sich der Benutzer an den Stützgriffen 14 ab. Das erfindungsgemäße Fahrzeug bietet dabei den Vorteil, dass der Benutzer bspw. An Steigungen den Antrieb 1, 25 zu Hilfe nehmen kann und sich so von dem Gehwagen ziehen lassen kann.

Neben den vorstehend genannten Arten der Nutzung des erfindungsgemäßen Fahrzeugs besteht aber darüber hinaus auch die Möglichkeit, das Fahrzeug stehend mit motorischem Antrieb zu benutzen, wie dies in Figur 1b und 3b dargestellt ist. Bei dieser Art der Nutzung ist der Sitz 2 mit dem Sitzausleger 31 hochgeklappt und in eine senkrechte Position gebracht. Die Standplatte 3 ist dagegen waagerecht ausgerichtet. Außerdem ist die Lenkstange der Lenkvorrichtung 4 ausgezogen bzw. die Griffe 14 befinden sich in ihrer oberen Position. In Folge dessen hat der Benutzer die Möglichkeit, auf die Standplatte 3 zu treten, die Lenkstange 6 zu ergreifen und sich stehend elektrisch fort zu bewegen.

Darüber hinaus besteht die Möglichkeit, das erfindungsgemäße Fahrzeug nach Art eines Laufrades zu benutzen, also im Sitzen zu gehen. Die hierfür erforderliche Position der Komponenten des erfindungsgemäßen Fahrzeugs ist beispielhaft in Figur 1c dargestellt. Für diese Art der Nutzung wird die Standplatte 3 in die senkrechte Position gebracht. Der Sitz 2 mit dem Sitzausleger 31 befindet sich in der waagerechten Position. Der Benutzer kann folglich auf der Sitzfläche 18 des Sitzes 2 Platz nehmen. Die Füße stehen auf dem jeweiligen Untergrund auf. Mit den Händen ergreift der Benutzer die Lenkstange 6, so dass das Fahrzeug durch Gehbewegungen mit Muskelkraft in Bewegung gesetzt werden kann.

Bei dem erfindungsgemäßen Fahrzeug bildet das U-förmige Grundgestell 34 die zentrale Trägervorrichtung. Gemeinsam mit dem Antriebsteil 29 mit Elektromotor bildet es die Basis für alle notwendigen als auch optionalen Funktionseinheiten zur Erfüllung der Gesamtfunktion.

Eine Teilfunktionseinheit ist die wegklappbare Standplatte 3 als auch der wegklappbare Sitz 2. Die wegklappbare Standplatte 3 bildet in der waagrechten Position mit den Schenkeln des Grundgestells 34, an denen die hinteren beiden Räder 35 montiert sind, eine stabile formschlüssig verbundene Einheit. Dieses Gestaltungsmerkmal ist wesentlich für die erzielte Leichtbauweise der Gesamteinheit. Der herunter klappbare Sitz 2 wird in der waagrechten Position allein über seine Befestigung im Bereich der Verbindung zwischen Antriebsteil 29 und Grundgestell 34 gehalten.

Weiterhin ist die Teilfunktionseinheit der Federung für die Stoßabfederung sowie für die Neigetechnik bei Kurvenfahrten für den sicheren Krankenfahrstuhl-Betrieb vorteilhaft. Diese Teilfunktionseinheit an der jeweils die hinteren Räder 35 befestigt sind dient gleichzeitig als Federung für unwegsames Gelände als auch als Neigetechnik, welche mit dem Körpergewicht zu steuern ist. Mit der Verlagerung des Körpergewichtes wird die Druckfederung zusammen gedrückt und somit eine Schräglage des Gesamtfahrzeuges erreicht, was besonders durch die drei Räder im Ausführungsbeispiel nach Figur 1, also die 3-Punkt-Auflage begünstigt wird. Mit der gleichen Mechanik wird die Stoßabfederung realisiert.

Das Antriebsteil 29 besteht im Wesentlichen aus einem Antriebsrad 32 mit Motor, welches in einer schwenkbaren Gabel aufgehängt ist. Der Raddurchmesser ist so bemessen dass der Radmittelpunkt oberhalb der Höhe üblicher Bordsteine ist, so dass das Rad 32 z.B. über Bordsteinkanten fahren kann, um von der Straße auf den Gehweg zu kommen.

Das Antriebsteil 29 ist leicht lösbar über die Adapterplatte 33 mit dem Grundgestell 34 verbunden. Diese Funktionalität ist wesentlich für den Transport bei Reisen als auch zur Mitnahme im Auto.

Auf dem Antriebsteil 29 liegt die Gepäckablage 5 auf, die halbrund ausgebildet ist, um im Betrieb schwenkbare Türen aufstoßen bzw. weiter öffnen zu können. Für die Funktion als Krankenfahrstuhl d.h. die Fortbewegung mittels Elektromotor im Sitzen, wie sie bspw. in Figur 1a dargestellt ist, ist die Standplatte 3 zum Aufstellen der Füße nach unten geklappt, also in die Waagrechte und der Sitz 2 ebenfalls in die waagrechte Position gebracht. Beim Fahren im Stehen (vgl. bspw. Figur 1b) wird nur der Sitz 2 in die Senkrechte geklappt.

Für den Gebrauch als Gehwagen bzw. Rollator (vgl. bspw. Figur 1b) müssen die Standplatte 3 und der Sitz 2 in die Senkrechte gebracht werden um zwischen den hinteren Rädern 35 gehen zu können. Im Vergleich zu den bisherigen Gehwagen erfolgt die Lenkung über das vordere schwenkbare Rad 32. Durch diese Möglichkeit kann der Rollator einfach in der gewünschten Richtung gehalten werden, auch bei ungünstigen Bodenbeschaffenheiten wie z.B. schadhaften Wegen oder bei leicht abfallendem Gelände quer zur Gehrichtung.

Eine weitere Möglichkeit bei der Benutzung als Gehwagen ist die Zuschaltung des vorderen Antriebsrades 32, so dass sich die Person bei Steigungen nach oben ziehen lassen kann.

Je nach Sicherheitsbedürfnis können für den Gehwagen-Betrieb zusätzlich zwei Lenkrollen 15 aktiviert werden (vgl. Figur 2). Diese Ausbaustufe mit insgesamt vier Rädern ist je nach Behinderungsgrad und Gleichgewichtssinn der Personen eine Option. Die vorzugsweise synchronisierten Lenkrollen 15 werden für ihren Einsatz nach unten geschoben und dann geklemmt. Das vordere schwenkbare Rad 32 hat dann keinen Bodenkontakt (Figur 2b). Falls nur die Funktion als Gehwagen benutzt werden soll, kann das Antriebsteil 29 mit dem vorderen schwenkbaren Antriebsrad 32 durch das Lösen eines Klemmhebels abgenommen werden.

Die mit der Erfindung erzielten Vorteile bestehen insbesondere darin, dass in einem Gerät zwei grundlegende Funktionalitäten integriert sind. Einerseits ist die wesentliche körperliche Aktivität durch Gehen möglich und bei nachlassender Körperkraft oder Unwohlsein andererseits eine weitere Fortbewegung mittels elektrischem Antrieb. Weiterhin ist im Betrieb als Gehwagen bzw. Rollator die Beweglichkeit im Wechseln der Richtung wesentlich größer als bei Krankenfahrstühlen, welche lediglich motorisch betrieben werden können. Zudem bietet sich durch die definierte Lenkbarkeit des Vorderrades 32 die Benutzung als Laufrad. Für eine Person mit Rückenproblemen ist somit eine Bewegung der Beine bei gleichzeitiger Rückenentlastung möglich. Die Standplatte 3 ist hierbei senkrecht nach oben geklappt (vgl. bspw. Figur 1c).

Darüber hinaus können mit dem Fahrzeug auch größere Gepäckstücke wie z.B. Golfschlägertaschen bewegt werden. Weiterhin ermöglicht die bogenförmige Auslegung der Gepäckablage 5 das Öffnen von Schwingtüren. Durch die schnelle Zerlegbarkeit ist außerdem ein Transport im Auto als auch auf Reisen problemlos möglich.

## Patentansprüche

1. Fahrzeug mit elektrischem Antrieb (1, 25) für eine Person, umfassend einen Sitz (2), eine Lenkvorrichtung (4) und mindestens drei Räder, **dadurch gekennzeichnet, dass** eine Standplatte (3) vorgesehen ist, und dass Sitz (2) und Standplatte (3) klappbar sind.

2. Fahrzeug nach Anspruch 1, **dadurch gekennzeichnet, dass** die Lenkvorrichtung (4) ausziehbar ist.

3. Fahrzeug nach Anspruch 1 oder 2, **dadurch gekennzeichnet, dass** ein Antriebsteil (29) und ein Grundgestell (34) ausgebildet sind, die lösbar miteinander verbunden sind.

4. Fahrzeug nach Anspruch 3, **dadurch gekennzeichnet, dass** das Antriebsteil (29) und das Grundgestell (34) formschlüssig miteinander verbunden sind.

5. Fahrzeug nach einem der vorgenannten Ansprüche, **dadurch gekennzeichnet, dass** eine Gepäckablage (5) vorgesehen ist.

6. Fahrzeug nach einem der vorgenannten Ansprüche, **dadurch gekennzeichnet, dass** die Räder (35) mit einer Federung (36) versehen sind.

7. Fahrzeug nach einem der vorgenannten Ansprüche, **dadurch gekennzeichnet, dass** Lenkräder (15) vorgesehen sind.

8. Fahrzeug nach Anspruch 7, **dadurch gekennzeichnet, dass** die Lenkräder (15) über Zahnriemen (16) synchronisiert sind.
